# EUROPÄISCHE PATENTANMELDUNG

(11) **EP 2 863 097 A1**
(43) Veröffentlichungstag der Anmeldung: **22.04.2015**
(21) Anmeldenummer: 13464015.0
(22) Anmeldetag: 16.10.2013
(51) Int. Cl.: F16K 49/00, F02D 9/10, F02M 31/10, F02M 31/20, F02M 15/02

(54) **Heiz-/Kühleinrichtung für ein Gehäuse insbesondere für einen Drosselklappenstutzen**

(71) Anmelder: Continental Automotive GmbH, 30165 Hannover (DE)
(72) Erfinder: Sippel, Thomas, 36037 Fulda (DE); Soptica, Silviu, 300748 Timisoara (RO)

(57) **Zusammenfassung**

Eine Heiz-/Kühleinrichtung (2) für ein Gebergehäuse (1) eines Drosselklappenstutzens einer Brennkraftmaschine hat zum Anschluss eines Medium führenden Kanals (3) ein aus Kunststoff gefertigtes und lösbar in dem Gehäuse (1) befestigtes Rohr (9). Das Rohr (9) ist axial gegen das Gehäuse (1) vorgespannt und radial gegenüber diesem abgedichtet. Weiterhin hat das Rohr (9) einen Teil einer Schnellkupplung (11) zum Anschluss einer Medium führenden Leitung (10).

## Beschreibung

Die Erfindung betrifft eine Heiz-/Kühleinrichtung für ein Gehäuse, insbesondere für einen Drosselklappenstutzen einer Brennkraftmaschine eines Kraftfahrzeuges mit einem im Gehäuse angeordneten, zur Durchströmung eines Heiz- oder Kühlmediums vorgesehenen Kanal, mit einem mit dem Kanal verbundenen Rohr, mit einem auf dem Rohr angeordneten Anschlussstutzen zum Anschluss von mediumführenden Schläuchen an den Kanal.

Heiz-/Kühleinrichtungen werden bei thermisch zu regelnden Bauteilen in Kraftfahrzeugen wie Gebergehäuse von Drosselklappenstutzen häufig eingesetzt und sind aus der Praxis bekannt. Das thermisch zu regelnde Gehäuse ist meist aus Leichtmetall gefertigt. Zwei Rohre für den Zu- und den Abfluss des Heiz- oder Kühlmediums sind meist aus Messing gefertigt und in das Gehäuse eingepresst. An den Kanal anzuschließende Schläuche werden mittels Schlauchschellen an den Rohren angebunden.

Nachteilig bei den bekannten Heiz-/Kühleinrichtungen ist, dass die Anschlüsse der Schläuche ein hohes Gewicht aufweisen und sehr aufwändig zu fertigen sind.

Der Erfindung liegt das Problem zugrunde, eine Heiz-/Kühleinrichtung der eingangs genannten Art so weiterzubilden, dass sie besonders kostengünstig zu fertigen ist.

Dieses Problem wird erfindungsgemäß dadurch gelöst, dass das Rohr aus Kunststoff gefertigt und lösbar in dem Gehäuse befestigt ist, und dass zwischen dem Gehäuse und dem Rohr ein Dichtelement angeordnet ist.

Durch diese Gestaltung lässt sich das Rohr besonders kostengünstig aus Kunststoff im Spritzgussverfahren fertigen. Das Rohr hat zudem ein geringes Gewicht. Ein weiterer Vorteil dieser Gestaltung besteht darin, dass nahezu beliebige Anschlussgeometrien für mediumführende Schläuche an dem Rohr angespritzt sein können. Da das Rohr lösbar in dem Gehäuse befestigt ist, können dank der Erfindung Rohre mit unterschiedlichen Anschlussgeometrien gefertigt werden und mit verschiedenen Gehäusen kombiniert werden. Dies trägt zudem zur Verringerung der zu bevorratenden Teilevielfalt bei.

Die Montage und Demontage der Schläuche an dem Gehäuse gestaltet sich gemäß einer anderen vorteilhaften Weiterbildung der Erfindung besonders einfach, wenn der Anschlussstutzen als männlicher Teil einer Schnellkupplung ausgebildet ist. Der männliche Teil der Schnellkupplung hat vorzugsweise Stützränder zur Abdichtung gegenüber einem weiblichen Teil und Rastausnehmungen zur Verrastung mit dem weiblichen Teil der Schnellkupplung. Als Schnellkupplung eignet sich insbesondere ein sogenannter VDA-Wasseranschluss.

Das Dichtelement könnte beispielsweise als Axialdichtring ausgebildet sein. Bei solchen Axialdichtringen können jedoch Kippbelastungen an dem Rohr zu Undichtigkeiten führen. Das Rohr ist gemäß einer anderen vorteilhaften Weiterbildung der Erfindung besonders zuverlässig gegenüber dem Gehäuse abgedichtet, wenn das Dichtelement zur Abdichtung des Rohrs gegenüber dem Gehäuse radial dichtend gestaltet ist.

Zur weiteren Vereinfachung der Montage des Dichtelementes trägt es gemäß einer anderen vorteilhaften Weiterbildung der Erfindung bei, wenn das Rohr eine Nut zur Aufnahme des als Radialdichtung ausgebildeten Dichtelementes hat.

Das Rohr lässt sich gemäß einer anderen vorteilhaften Weiterbildung der Erfindung in besonders einfach entformbaren Werkzeugen fertigen, wenn das Rohr einen Absatz mit einem durchmesserkleinen Abschnitt hat, und der durchmesserkleine Abschnitt das radial dichtende Dichtelement haltert und durchgehend bis zum freien Ende des Rohres geführt ist. Durch diese Gestaltung wird ein Formtrennungsgrad, wie er zur Erzeugung einer Nut notwendig ist, vermieden. Vorzugsweise hat das Gehäuse einen komplementär geformten Absatz.

Auf das Rohr einwirkende Kräfte lassen sich gemäß einer anderen vorteilhaften Weiterbildung der Erfindung zuverlässig von dem Dichtelement fernhalten, wenn das Rohr einen Flansch aufweist und der Flansch des Rohres axial gegen einen Flansch des Gehäuses vorgespannt ist. Dies trägt zur Erhöhung der Zuverlässigkeit der Dichtheit der Verbindung des Rohres an dem Gehäuse bei.

Das Rohr könnte beispielsweise ein Gewinde aufweisen und in das Gehäuse eingedreht werden. Dies könnte jedoch dazu führen, dass sich das Rohr bei Belastungen in Drehrichtung löst. Das Rohr ist gemäß einer anderen vorteilhaften Weiterbildung der Erfindung zuverlässig mit dem Gehäuse verbunden, wenn zumindest eine Befestigungsschraube zur Halterung des Rohres an dem Gehäuse parallel zu dem Rohr angeordnet ist.

Ein Einlass- und ein Auslassanschluss des Gehäuses gestalten sich gemäß einer anderen vorteilhaften Weiterbildung der Erfindung besonders einfach, wenn der Kanal im Gehäuse zu zwei gleich aufgebauten Aufnahmen für jeweils ein Rohr geführt ist. Durch diese Gestaltung lässt sich die Heiz-/Kühleinrichtung aus einer besonders geringen Anzahl an Gleichteilen zusammenstellen.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in:
- Fig. 1: eine Schnittdarstellung durch einen Teilbereich eines Gehäuses mit einer erfindungsgemäßen Heiz-/Kühleinrichtung,
- Fig. 2: vergrößert einen Anschluss der erfindungsgemäßen Heiz-/Kühleinrichtung aus Figur 1,
- Fig. 3: eine weitere Ausführungsform eines Anschlusses der Heiz-/Kühleinrichtung aus Figur 1.

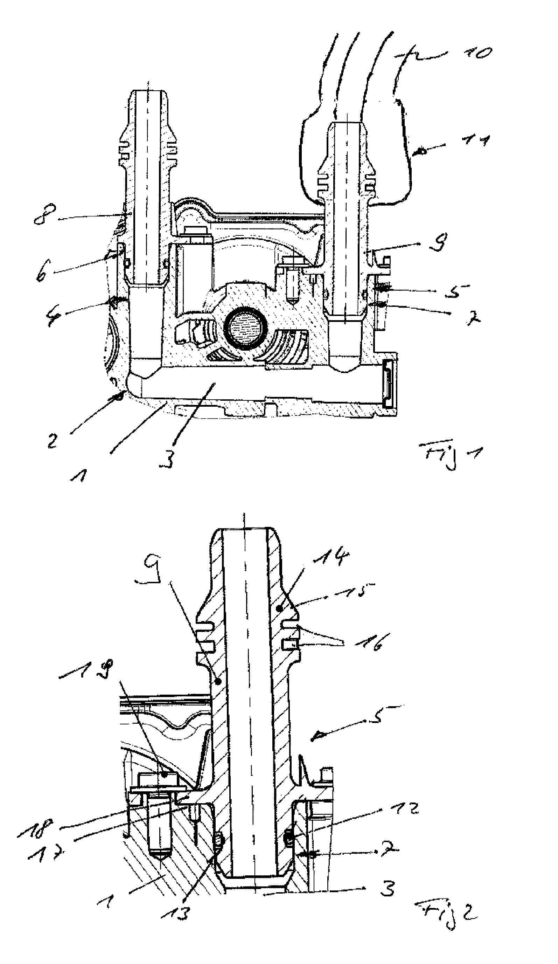

Figur 1 zeigt ein Gehäuse 1 eines Drosselklappenstutzens für eine Brennkraftmaschine eines Kraftfahrzeuges. Das Gehäuse 1 ist als Gebergehäuse für einen nicht näher dargestellten Antrieb einer allgemein bekannten Drosselklappe ausgebildet und hat eine Heiz-/Kühleinrichtung 2 mit einem Kanal 3. Der Kanal 3 ist zwischen zwei Anschlüssen 4, 5 geführt und dient zur Durchströmung eines Heiz- oder Kühlmediums zur Beheizung oder Kühlung des Gehäuses 1. Das Gehäuse 1 hat Aufnahmen 6, 7 für jeweils ein Rohr 8, 9. An einem der Rohre 9 ist beispielhaft ein mediumführender Schlauch 10 mittels einer Schnellkupplung 11 angeschlossen.

Figur 2 zeigt stark vergrößert eines der Anschlüsse 5 aus Figur 1. Hierbei ist zu erkennen, dass das Rohr 9 in der Aufnahme 7 mittels eines Dichtelementes 12 abgedichtet ist. Das Dichtelement 12 ist als radial abdichtender O-Ring ausgebildet und in einer umlaufenden Nut 13 des Rohres 9 angeordnet. Der aus dem Gehäuse 1 herausragende Teil des Rohres 9 hat einen Anschlussstutzen 14. Der Anschlussstutzen 14 ist als männlicher Teil der in Figur 1 dargestellten Schnellkupplung 11 ausgebildet und hat einen Stützrand 15 zur Abdichtung gegenüber einem in Figur 1 dargestellten weiblichen Teil und Rastausnehmungen 16 zur Verrastung mit dem weiblichen Teil der Schnellkupplung 11. Das Gehäuse 1 und das Rohr 9 weisen jeweils einen Flansch 17, 18 auf. Die Flansche 17, 18 sind axial gegeneinander vorgespannt. Eine Befestigungsschraube 19 zur Vorspannung der Flansche 17, 18 ist parallel zur Achse des Rohres 9 angeordnet. Das andere in Figur 1 dargestellte Rohr 8 ist wie das in Figur 2 beschriebene Rohr 9 aufgebaut.

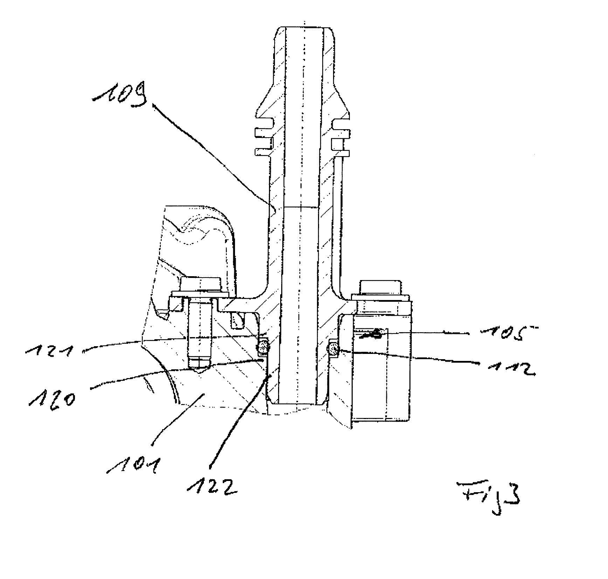

Figur 3 zeigt eine weitere Ausführungsform eines Anschlusses 105 aus Figur 1. Ein Gehäuse 101 und ein Rohr 109 haben komplementär zueinander angeordnete Absätze 120, 121. Bei dieser Ausführungsform ist ein als radial dichtender O-Ring ausgebildetes Dichtelement 112 zwischen den Absätzen 120, 121 gehalten. Ein durchmesserkleiner Abschnitt 122 des Rohres 109 haltert das Dichtelement 112 und ist bis zum freien Ende des Rohres 109 geführt. Ansonsten ist der Anschluss 105 wie der aus Figur 2 aufgebaut. Bezugszeichen von einander entsprechenden Bauteilen sind in Figur 3 gegenüber Figur 2 um den Betrag 100 erhöht.

## Patentansprüche

1. Heiz-/Kühleinrichtung (2) für ein Gehäuse (1, 101), insbesondere für einen Drosselklappenstutzen einer Brennkraftmaschine eines Kraftfahrzeuges mit einem im Gehäuse (1, 101) angeordneten, zur Durchströmung eines Heiz- oder Kühlmediums vorgesehenen Kanal (3), mit einem mit dem Kanal (3) verbundenen Rohr (9, 109), mit einem auf dem Rohr (9, 109) angeordneten Anschlussstutzen (14) zum Anschluss von mediumführenden Schläuchen (10) an den Kanal (3), **dadurch gekennzeichnet, dass** das Rohr (9, 109) aus Kunststoff gefertigt und lösbar in dem Gehäuse (1, 101) befestigt ist, und dass zwischen dem Gehäuse (1, 101) und dem Rohr (9, 109) ein Dichtelement (12, 112) angeordnet ist.

2. Heiz-/Kühleinrichtung nach Anspruch 1, **dadurch gekennzeichnet, dass** der Anschlussstutzen (14) als männlicher Teil einer Schnellkupplung (11) ausgebildet ist.

3. Heiz-/Kühleinrichtung nach Anspruch 1 oder 2, **dadurch gekennzeichnet, dass** das Dichtelement (12, 112) zur Abdichtung des Rohrs (9, 109) gegenüber dem Gehäuse (1, 101) radial dichtend gestaltet ist.

4. Heiz-/Kühleinrichtung nach Anspruch 3, **dadurch gekennzeichnet, dass** das Rohr (9) eine Nut (13) zur Aufnahme des als Radialdichtung ausgebildeten Dichtelementes (12) hat.

5. Heiz-/Kühleinrichtung nach Anspruch 3, **dadurch gekennzeichnet, dass** das Rohr (109) einen Absatz (121) mit einem durchmesserkleinen Abschnitt (122) hat, und dass der durchmesserkleine Abschnitt 122 das radial dichtende Dichtelement (112) haltert und durchgehend bis zum freien Ende des Rohres (109) geführt ist.

6. Heiz-/Kühleinrichtung nach einem der Ansprüche 1 bis 5, **dadurch gekennzeichnet, dass** das Rohr (9, 109) einen Flansch (18) aufweist, und dass der Flansch (18) des Rohres (9, 109) axial gegen einen Flansch (17) des Gehäuses (1, 101) vorgespannt ist.

7. Heiz-/Kühleinrichtung nach einem der Ansprüche 1 bis 6, **dadurch gekennzeichnet, dass** zumindest eine Befestigungsschraube (19) zur Halterung des Rohres (9, 109) an dem Gehäuse (1, 101) parallel zu dem Rohr (9, 109) angeordnet ist.

8. Heiz-/Kühleinrichtung nach einem der Ansprüche 1 bis 7, **dadurch gekennzeichnet, dass** der Kanal (3) im Gehäuse (1, 101) zu zwei gleich aufgebauten Aufnahmen für jeweils ein Rohr (8, 9, 109) geführt ist.

## Geänderte Patentansprüche

### Geänderte Patentansprüche gemäss Regel 137(2) EPÜ.

1. Heiz-/Kühleinrichtung für ein Gehäuse (1, 101) eines Drosselklappenstutzens einer Brennkraftmaschine eines Kraftfahrzeuges mit einem im Gehäuse (1, 101) angeordneten, zur Durchströmung eines Heiz- oder Kühlmediums vorgesehenen Kanal (3), mit einem mit dem Kanal (3) verbundenen Rohr (9, 109), mit einem auf dem Rohr (9, 109) angeordneten Anschlussstutzen (14) zum Anschluss von mediumführenden Schläuchen (10) an den Kanal (3), **dadurch gekennzeichnet, dass** das Rohr (9, 109) aus Kunststoff gefertigt und lösbar in dem Gehäuse (1, 101) befestigt ist, und dass zwischen dem Gehäuse (1, 101) und dem Rohr (9, 109) ein Dichtelement (12, 112) angeordnet ist.
